Europäisches Patentamt

European Patent Office

Office européen des brevets

(19)

(11)  **EP 1 677 251 A2**

(12)  **EUROPEAN PATENT APPLICATION**

(43) Date of publication:
**05.07.2006 Bulletin 2006/27**

(51) Int Cl.:
***G06T 7/20*** (2006.01)

(21) Application number: **05027074.3**

(22) Date of filing: **12.12.2005**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **21.12.2004 KR 2004109854**

(71) Applicant: **Samsung Electronics Co., Ltd.**
**Suwon-si, Gyeonggi-Do (KR)**

(72) Inventors:
• **Ko, Byoung-Chul**
  **Seodaemun-gu**
  **Seoul (KR)**
• **Kang, Bo-Hyun**
  **Dongdaemun-gu**
  **Seoul (KR)**

(74) Representative: **Lang, Johannes**
  **Bardehle Pagenberg**
  **Dost Altenburg Geissler**
  **Galileiplatz 1**
  **81679 München (DE)**

(54)  **Apparatus and method for distinguishing between camera movement and object movement and extracting object in a video surveillance system**

(57)  The invention relates to an apparatus and a method for distinguishing between camera movement and object movement, and for extracting an object in a video surveillance system for detecting an invader based upon object movement. The apparatus and method distinguish actual invader detection owing to object movement from erroneous invader detection owing to a camera's movement or shaking. In the case of actual invader detection owing to object movement, a corresponding object is extracted. In this way, optical flow is obtained from an input dynamic image, and is converted into angle values and classified. If an angle value exceeds a predetermined critical value, it is determined that object movement is detected. If the angle value does not exceed the predetermined critical value, it is determined that camera movement or shaking is detected. In the case of object movement, only an area of movement is extracted from an object via X-Y projection with respect to optical flow of an object, and then the object is divided. This is carried out in consecutive frames to track a passage of the moving object.

FIG. 1

**Description**

BACKGROUND OF THE INVENTION

Technical Field

The present invention relates to an apparatus and a method for distinguishing between camera movement and object movement, and extracting an object in a video surveillance system for detecting an invader based upon object movement, and more particularly, an apparatus and method which distinguish actual invader detection owing to object movement from erroneous invader detection owing to camera's movement or shaking, and which, in the case of actual invader detection owing to object movement, extract a corresponding object.

Related Art

Video surveillance systems for detecting object movement are generally executed according to the following methods which use a differential image signal between two frames and a motion vector.
A method using differential image signals is devised to deduct a pixel value of a coordinate point in a present frame from that of a corresponding point in a previous frame, so that a pixel shows a value other than "0" when a slight movement exists between the previous and present frames.
When such pixels have a preset reference value or more, this method detects a variation in pixel values and, thus, determines that there is an invader.
A method using a motion vector adopts, for example, a full search technique, and is devised to detect a motion vector between previous and present frames, and when the detected value of the motion vector is a preset reference value or more, determines that there is an invader.
The above method using a differential image signal adopts a simple calculation process and, thus, can advantageously determine whether or not there is any movement in a rapid time period. However, there is a drawback in that it is sensitive to illumination change or noise. In addition, a differential value of all pixels becomes "0" when a camera is stationary without any movement. Any moving or shaking camera will enlarge the change in pixel values so that actual movement of an object cannot be distinguished from any movement thereof caused by moving or shaking of the camera.
With respect to advantages of the vector method, it is less sensitive to illumination change or noise compared to the differential image signal method, and it is able to detect the moving direction of a moving object. However, this method also cannot distinguish between vectors owing to object movement and camera movement.
Other representative methods, other than the afore-described methods, for tracking a moving object via input image signals may include a correlation method (using a block matching algorithm), a disturbance map method, a color distribution method, an optical flow method, and the like.
A multiple tracking and surveillance system for a moving object is disclosed in Korean Patent Application Publication No. 10-2000-22818, which has approached commercial use by applying and combining such methods.
Although the technique disclosed in the above patent document shows excellent object extraction ability, this technique adopts a camera calibration algorithm since image calibration is essentially required according to camera movement. As a result, this increases the quantity of data to be processed by a system, thereby decelerating the processing rate thereof. In addition, it is also difficult to ensure correct image calibration.
Furthermore, the block matching algorithm used in the technique disclosed in the above patent document has drawbacks in that its tracking ability degrades when a moving object changes its size, shape, brightness and so on, and tracking errors in individual frames accumulate to the extent that the object deviates from a matching reference block.

SUMMARY OF THE INVENTION

It is, therefore, an object of the present invention to provide an apparatus and a method for distinguishing between camera movement and object movement, and extracting an object in a video surveillance system for detecting an invader based upon object movement, which apparatus and method distinguish actual invader detection owing to object movement from erroneous invader detection owing to a camera's movement or shaking, and which, in the case of actual invader detection owing to object movement, extract a corresponding object.
According to an aspect of the invention for realizing the above objects, there is provided an apparatus for distinguishing between camera movement and object movement and for extracting an object in a video surveillance system, the apparatus comprising: an optical flow extractor for extracting a motion vector for optical flow between a present input image frame and a previous image frame; an angle histogram generator for generating an angle histogram of the motion vector for optical flow extracted by the optical flow extractor; and a controller for determining between object movement and camera movement based upon the angle histogram generated by the angle histogram generator, and in the case of object movement, for extracting a moving object.

The apparatus of the invention may further comprise means for filtering noise from the present and previous image frames, and then providing the present and previous frames cleared of noise to the optical flow extractor, the noise filtering means including a Gaussian filter for clearing Gaussian noise.

Preferably, the angle histogram generator is adapted to convert the motion vector for optical flow extracted by the optical flow extractor into an angle so as to generate the angle histogram for the optical flow motion vector.

In this case, it is preferable that the angle histogram be generated after radian values of -π to +π are converted into angle values of 0 to 360 degrees, and then the angle values are normalized to 0 to 35.

Preferably, when camera movement and object movement take place simultaneously, the controller removes optical flow corresponding to an angle of maximum movement from entire optical flow between the previous and present frames, and applies X-Y projection to the optical flow corresponding to remaining angles so as to extract the moving object.

According to an aspect of the invention for realizing the above objects, there is provided a method for distinguishing between camera movement and object movement, and for extracting an object in a video surveillance system, the method comprising the steps of: extracting a motion vector for optical flow between a present input image frame and a previous image frame; generating an angle histogram of the motion vector for optical flow extracted by the optical flow extractor; and determining between object movement and camera movement based upon the angle histogram generated by the angle histogram generator, and in the case of object movement, extracting a moving object.

BRIEF DESCRIPTION OF THE DRAWINGS

A more complete appreciation of the invention, and many of the attendant advantages thereof, will be readily apparent as the same becomes better understood by reference to the following detailed description when considered in conjunction with the accompanying drawings in which like reference symbols indicate the same or similar components, wherein:

FIG. 1 is a block diagram illustrating an apparatus for distinguishing between camera movement and object movement, and extracting an object in a video camera surveillance system according to the invention;

FIGS. 2A to 2C are pictures illustrating previous and present frame images and optical flow distribution between the previous and present frames;

FIG. 3A is a picture illustrating a previous frame image, FIG. 3B is a picture illustrating a present frame image, FIG. 3C is a picture illustrating optical flow distribution in which only an object is moved with a camera being fixed, and FIG. 3D is an angle histogram illustrating optical flow distribution in which only an object is moved;

FIG. 4A is a picture illustrating a previous frame image, FIG. 4B is a picture illustrating a present frame image, FIG. 4C is a picture illustrating optical flow distribution in which only a camera is moved via, for example, panning or tilting without any object movement, and FIG. 4D is an angle histogram illustrating optical flow distribution in which a camera is moved via, for example, panning or tilting;

FIG. 5A is a picture illustrating a previous frame image, FIG. 5B is a picture illustrating a present frame image, FIG. 5C is a picture illustrating optical flow distribution in which a camera is shaking with substantially no object movement, and FIG. 5D is an angle histogram illustrating optical flow distribution in which a camera is shaking;

FIGS. 6A to 6D are pictures illustrating a process for extracting an object when only object movement occurs without any camera movement; and

FIG. 7 is a flowchart illustrating a process for distinguishing between camera movement and object movement, and extracting an object in a video surveillance system according to the invention.

DETAILED DESCRIPTION OF THE INVENTION

The following detailed description will, in conjunction with the accompanying drawings, present an apparatus and a method for distinguishing between camera movement and object movement, and for extracting an object in a video surveillance system according to the invention.

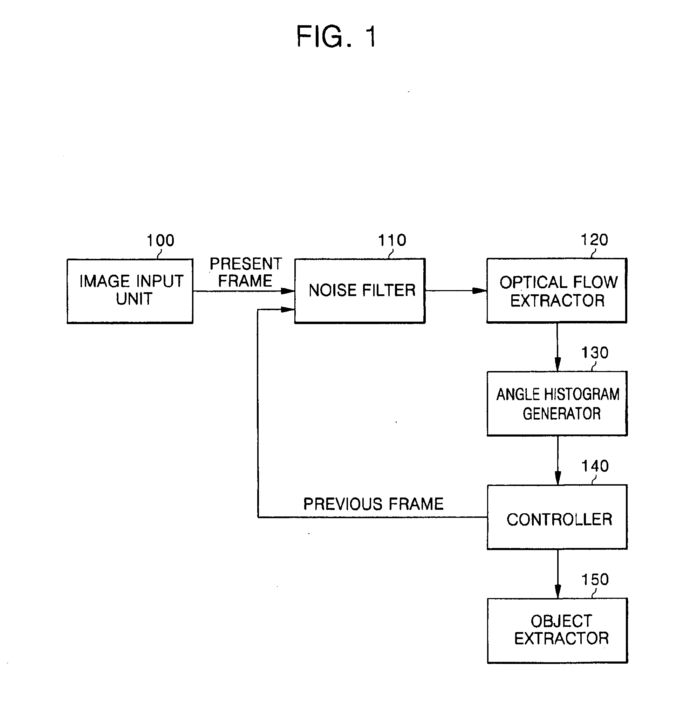

FIG. 1 is a block diagram illustrating an apparatus for distinguishing between camera movement and object movement, and extracting an object in a video camera surveillance system according to the invention.

As shown in FIG. 1, the video camera surveillance system includes an image input unit 100, a noise filter 110, an optical flow extractor 120, an angle histogram generator 130, a controller 140 and an object extractor 150.

The image input unit 100 sends an image frame for a present image, taken by a camera capable of panning and tilting, to the noise filter 110.

The noise filter 110 filters the present image frame inputted from the image input unit 100 and a previous image frame of noise. The noise filter 110 may comprise a Gaussian filter that performs low-pass filtering to Gaussian noise.

The optical flow extractor 120 extracts a motion vector for optical flow between the previous and present frames which are cleared of Gaussian noise by the noise filter 110. Herein the terminology "optical flow" means the velocity distribution of obvious movement in an image created by gradual variation in brightness pattern, and can be expressed by the motion vector between previous and present frames.

The histogram generator 130 serves to convert a vector value of optical flow detected and extracted by the optical flow extractor 120 into a degree value. When an angle histogram is generated, the histogram generator 130 normalizes the angle histogram so that its angle value is converted from 0 through 360 degrees into 0 through 36 degrees.

The controller 140 uses the angle histogram generated by the angle histogram generator 130 in order to determine, according to preset regulations, whether or not any pixel value variation of an image is caused by object movement or camera movement (e.g., panning, tilting and shaking). A method for distinguishing between object movement and camera movement according to preset regulations will be described below.

If the controller 140 determines that the pixel value variation of an image is caused by object movement, the object extractor 150 projects a vector value for optical flow detected by the optical flow detector 130 in X-Y directions so as to extract an object exclusively from the background image.

Reference will be now made in detail to the operation of the apparatus for distinguishing between camera movement and object movement, and for extracting an object in a video surveillance system according to the invention having the afore-described construction.

First, the noise filter 110 removes Gaussian noise from the present image frame, inputted from the image input unit 100, and the previous image frame by using a Gaussian filter, and then provides the present and previous frames cleared of noise to the optical flow detector 120.

The optical flow detector 120 detects optical flow between the previous and present frames cleared of noise by the noise filter 110.

An optical flow technique is an approach similar to a motion vector technique. Advantageously, this technique can measure a movement direction at every pixel, and has a detection rate faster than that of a full search technique. Herein, as a method for detecting optical flow, this invention adopts the optical flow detection process proposed by Horn and Schunck.

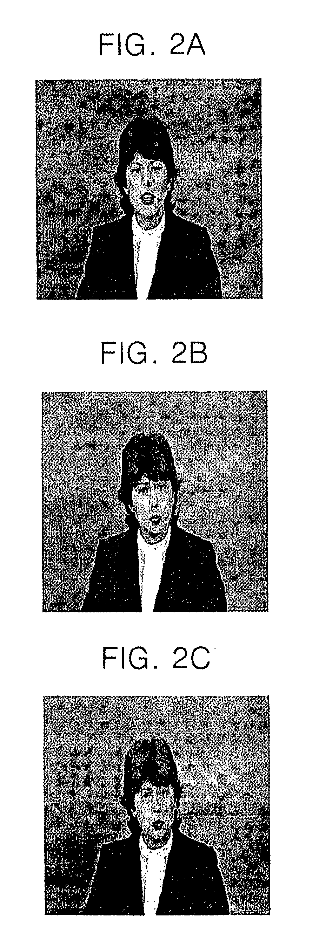

This technique assumes that optical flow is constant in a predetermined area, and unites optical flow constraint equations of individual pixels in eight adjacent directions to calculate a minimum value satisfying constraint conditions based upon a least square method so as to produce optical flow. A result of optical flow produced by this technique is illustrated in FIGS. 2A to 2C, in which FIG. 2A shows a previous frame image, FIG 2B. shows a present frame image, and FIG. 2C shows a frame image with respect to a result of optical flow detection between the previous and present frames. In these drawings, it is seen that a variation in optical flow occurs in the face of the frame images according to the movement of the face.

As any optical flow between the previous and present frames is detected through the above process, a motion vector value for the detected optical flow is provided to the angle histogram generator 130.

The angle histogram generator 130 converts the motion vector value for optical flow detected by the optical flow detector 120 into a radian value.

When an X axis displacement dx and a Y axis displacement dy are applied to the function radian = $\mathrm{atan}^2(dx, dy)$ in order to estimate the radian value, a value in the range of $-\pi$ to $+\pi$ is obtained, which value is converted into an angle value D according to Equation 1 below, and if the resultant angle value D is negative, recalculation is performed according to Equation 2 below:

$$D = \text{radian} \times (180/\pi) \dots\dots \text{Equation 1}$$

$$D' = 180 + (D \times (-1)) \dots\dots \text{Equation 2}$$

In this case, all of the vector values relating to optical flow are converted into values ranging from 0 to 360, which are in turn normalized into values of 0 to 35 in order to facilitate analysis.

For example, values ranging from 0 to 9 are converted into "0", and values ranging from 10 to 19 are converted into "1".

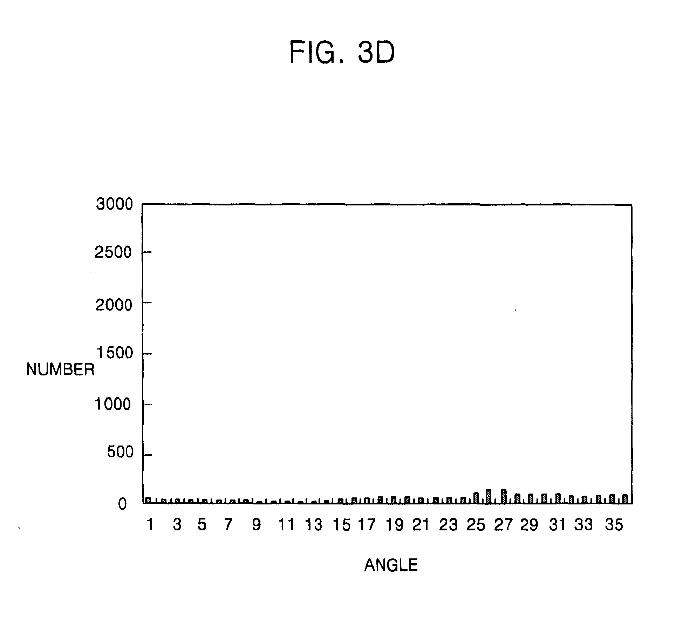

Results obtained by converting the vector values of optical flow into angle values are reported in FIG. 3D, FIG. 4D and FIG. 5D.

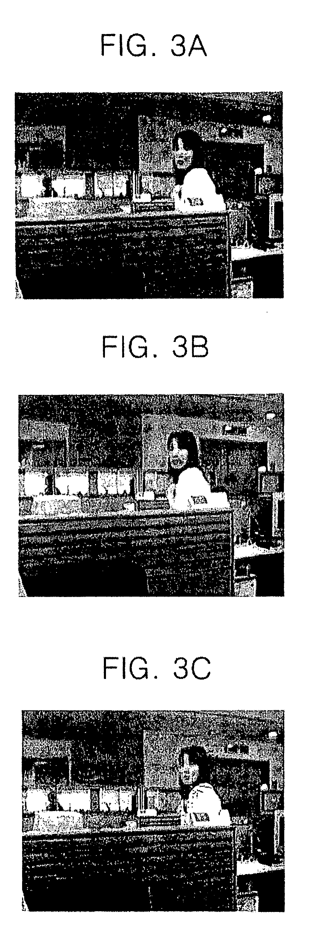

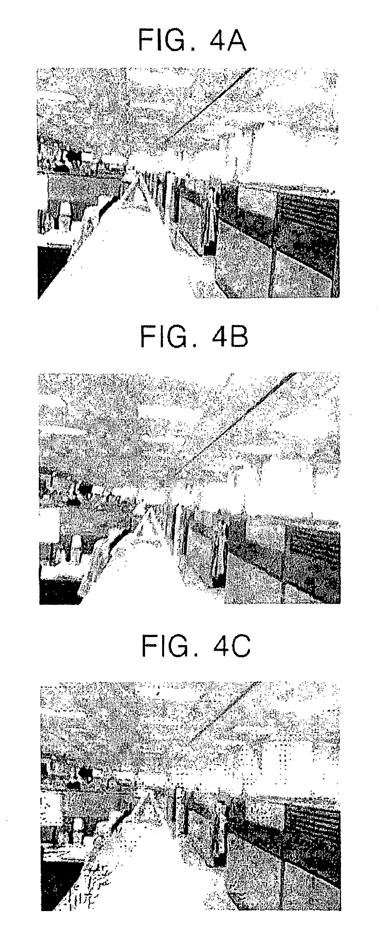

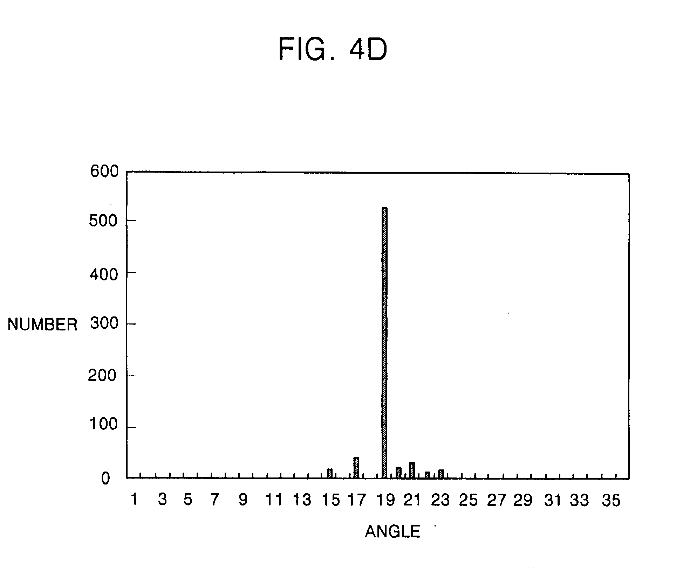

Herein, FIG. 3A illustrates a previous frame image, FIG. 3B illustrates a present frame image, FIG. 3C illustrates optical flow distribution in which only an object is moved with a camera being fixed, FIG. 3D is an angle histogram illustrating optical flow distribution in which only an object is moved, FIG. 4A illustrates a previous frame image, FIG. 4B illustrates a present frame image, FIG. 4C illustrates optical flow distribution in which only a camera is moved via, for example, panning or tilting without any object motion, and FIG. 4D is an angle histogram illustrating optical flow distribution in which a camera is moved via, for example, panning or tilting.

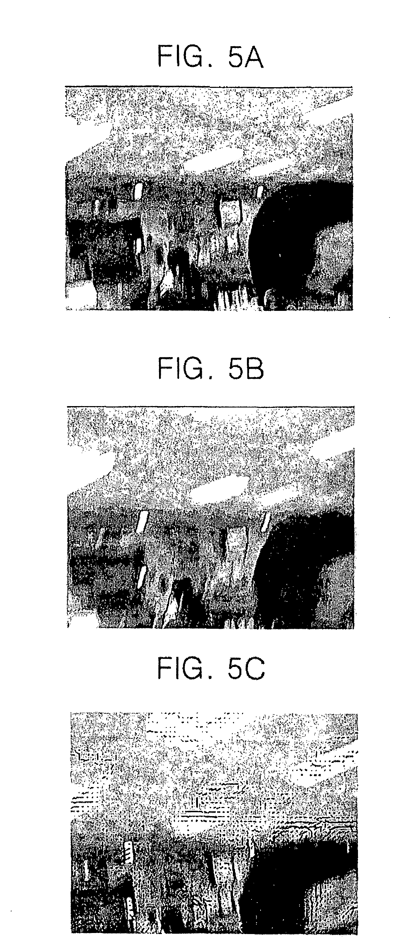

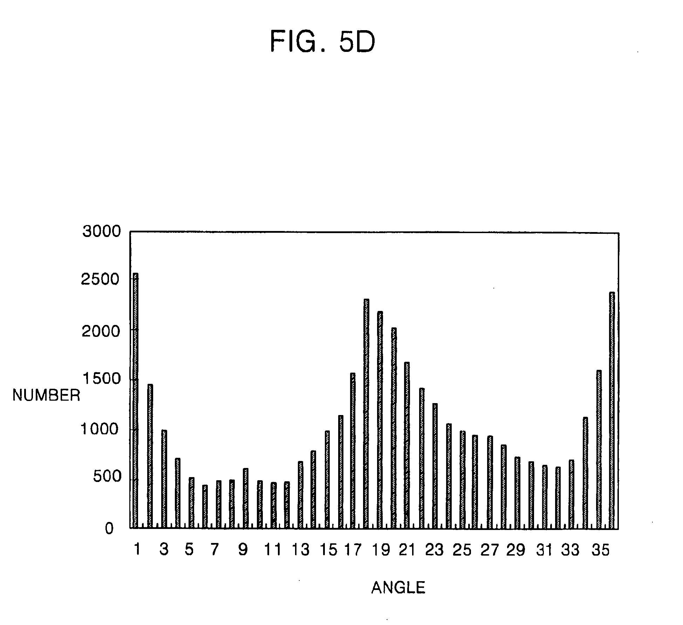

In addition, FIG. 5A illustrates a previous frame image, FIG. 5B illustrates a present frame image, FIG. 5C illustrates optical flow distribution in which a camera is shaking with substantially no object movement, and FIG. 5D is an angle histogram illustrating optical flow distribution in which a camera is shaking.

As shown in FIG. 3C, when there is object movement without camera movement, optical flow takes place locally in a specific area of an image. On the other hand, when camera movement (e.g., panning and tilting) takes place as shown in FIGS. 4C and 5C, optical flow can be seen in the whole image area.

With respect to camera movement, "panning" means that a fixed camera moves a view point horizontally while "tilting" means that a fixed camera moves a view point vertically. In the case of the panning or tilting of a camera, large values exist mainly at a horizontal or vertical angle in an angle histogram as shown in FIG. 4D. On the other hand, camera shaking shows uniform values across entire angles. Based upon these features, camera movement (e.g., panning, tilting and shaking) can be detected.

As shown in FIG. 1, the controller 10 acts to determine the movement of an object and/or the movement of a camera by analyzing the angle histogram generated by the histogram generator 130.

That is, when the angle histogram is produced by the angle histogram generator 130, the controller 140 generates regulations (discussed below) and then distinguishes the movement of an object from the movement of a camera. In addition, the controller 140 can distinguish among shaking, panning and tilting of the camera.

First, the controller 140 analyzes the angle histogram so as to first detect only object movement and camera movement according to the regulation 1 below.

Regulation 1: Camera Movement and Object Movement

Object movement has a feature of generating local optical flow in an image, and thus it is detected according to Equation 3 below:

$$\theta = \frac{Mv}{TMv},$$

if $\theta < 0.3$, object movement, and
if $\theta \ni 0.3$, camera movement;
wherein Mv means the number of optical flow that is actually created and TMv means the number of whole pixels where optical flow can take place. When the number of pixels having optical flow is under 30%, this is determined to be object movement.

That is, if $\theta$ is smaller than, for example, a critical value 0.3 (30%) in Equation 3 above, the controller 140 determines that only object movement has taken place without any camera movement. If $\theta$ is the critical value 0.3 (30%) or more, the controller 140 determines that only camera movement has taken place without any object movement.

If 0 is smaller than the preset critical value in Equation 3 above, that is, the number of actual optical flow occurrences is less than 30% of the total pixels, the controller 140 determines that only object movement has taken place, and provides an optical flow detection image to the object extractor 150 to extract a moving object.

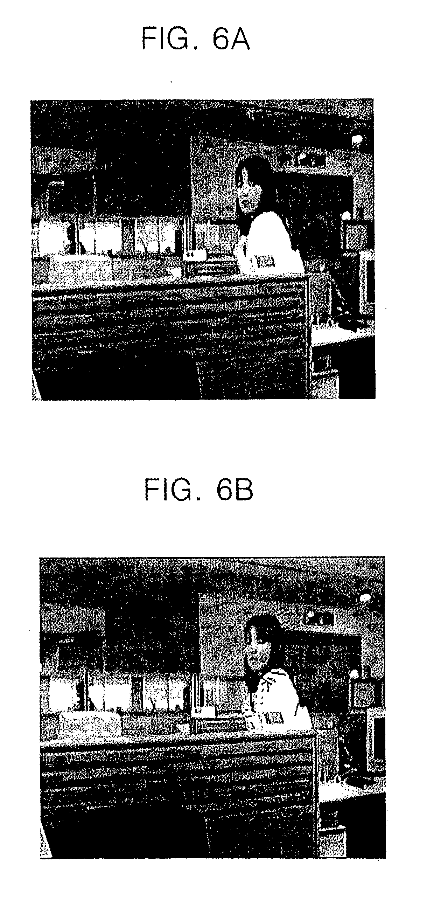

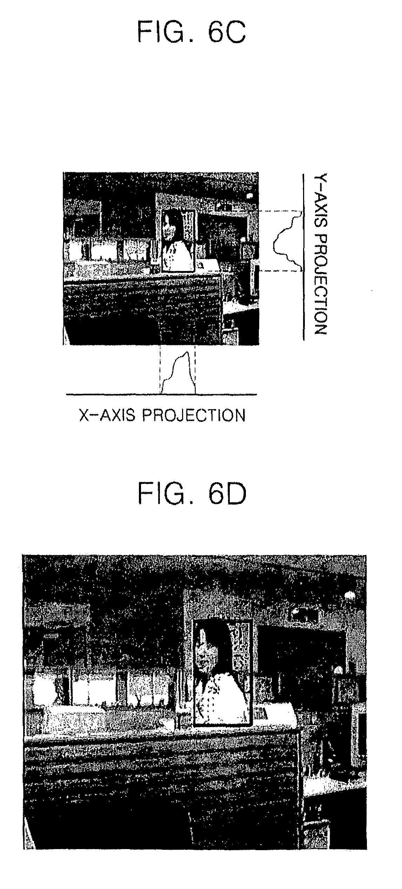

The object extractor 150 projects an optical flow creation area between previous and present frames in X-Y axes, and produces vertical and horizontal coordinate values of an object based upon projected histogram values so as to extract the area of the object. Such a process for extracting an object is illustrated in FIGS. 6A to 6D.

FIGS. 6A to 6D are pictures illustrating a process for extracting an object when only object movement occurs without any camera movement. To summarize the object extracting process, as shown in FIG. 6A, optical flow is detected for input images (i.e., previous and present frames), X-Y axis projection is performed with respect to a detected optical flow area, and vertical and horizontal coordinate values of an object are produced based upon projected histogram values so as to extract the area of the object.

In the meantime, if 0 is equal to the critical value or more according to Equation 3 of Regulation 1 above, the controller 140 determines that only camera movement has taken place without any object movement.

However, such camera movement also has to be classified as panning, tilting, shaking, or the like.

Accordingly, the controller 140 applies Regulation 2 below in order to classify the camera movement.

Regulation 2: Regulation for Distinguishing Among Shaking, Panning and Tilting of a Camera

While camera shaking creates generally uniform histogram values according to angles as shown in FIG. 5D, camera panning and tilting cause the camera to move in one vertical or horizontal direction, thereby creating a histogram profile prominent at one angle as shown in FIG. 4D.

Therefore, the controller 140 utilizes such properties and applies Equation 4 below so as to distinguish among shaking, panning and tilting of the camera:

$$\mathrm{b} = \max(\mathrm{H}), \quad \theta_\sigma = \frac{\sqrt{\sum_{v=0}^{35}(\theta_b - \theta_v)^2}}{N}$$

if $\theta_\sigma < T$, pan tilt, and

if $\theta_\sigma \, \exists \, T$, camera shaking;

wherein b indicates an angle having a maximum cumulative number in an angle histogram (H), $\theta_b$ indicates a maximum cumulative number at b. In addition, $\theta_b$ indicates a histogram cumulative number at an angle v, and T indicates a critical value for distinguishing camera movement from other factors.

Equation 4 above is produced based upon such consideration as the fact that camera panning or tilting causes a camera to move in one direction, thereby creating a histogram profile prominent at one angle with a small value of standard deviation, whereas camera shaking causes a camera to move in several directions simultaneously rather than in one direction, thereby having a relatively large value of standard deviation. Generally according to Equation 4, b existing in the range of 0 to 1 and 34 to 35 indicates camera panning, and b existing in the range of 17 to 19 and 26 to 27 indicates camera tilting.

Furthermore, the controller 140 may detect object movement taking place simultaneously with camera shaking, panning or tilting.

In that case, the controller 140 may apply Regulation 3 below to detect object movement taking place at the same time with camera shaking, panning or tilting.

Regulation 3: Object Movement Taking Place Simultaneously with Camera Shaking, Panning or Tilting

When object movement takes place in the interim of camera panning or tilting, it is necessary to distinguish this from other factors. For this purpose, when camera panning or tilting takes place according to Equation 3 in Regulation 1 above and Equation 4 in Regulation 2 above, the controller 140 shown in FIG. 1 applies Equation 3 of Regulation 1 to histogram values of the angle histogram (H) except for the angle b of maximum cumulative number. In this way, if the result of Equation 3 of Regulation I exceeds a critical value, it is determined that object movement has taken place simultaneously with camera panning or tilting.

After both of object movement and camera movement are detected, a process of extracting only an object based upon object movement is needed.

In order to extract an object from a background, an optical flow area detected by the optical flow detector 120 is first projected in X-Y axes, and vertical and horizontal coordinate values of an object are produced based upon projected histogram values, thereby extracting an object area. This process is illustrated in FIG. 6A to 6D.

Then, when object movement has taken place simultaneously with camera panning or tilting, the object area is extracted through X-Y axis projection by subtracting optical flow corresponding to the angle b of maximum movement from total optical flow and using remaining optical flow.

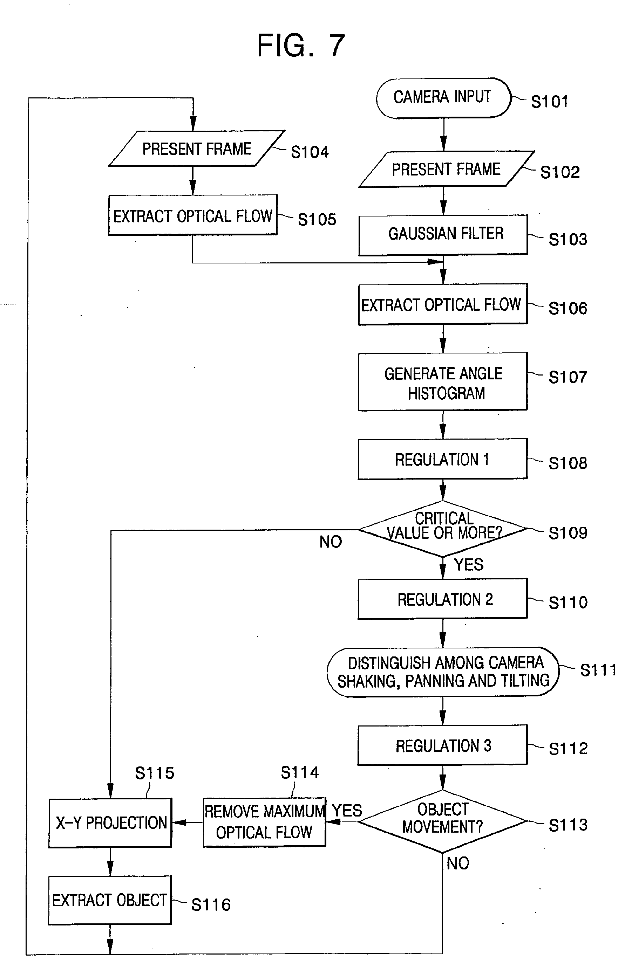

Referring to FIG. 7, a method for distinguishing between camera movement and object movement, and extracting an object in a video surveillance system according to the invention, will now be described. The latter corresponds to the operation of the apparatus for distinguishing between camera movement and object movement, and extracting an object in a video surveillance system according to the invention.

FIG. 7 is a flowchart illustrating a process for distinguishing between camera movement and object movement, and extracting an object in a video surveillance system according to the invention.

As shown in FIG. 7, when an image is inputted via a camera in S101, Gaussian noise is filtered from a present frame of the input image by using a Gaussian filter in S 102 and S103.

Noise is also cleared from a previous frame image with a Gaussian filter in S 104 and S105.

In S106, optical flow between the previous and present frame images cleared of noise is extracted as shown in FIG. 2. Herein, the optical flow technique is similar to the motion vector technique, but can advantageously measure movement direction in every pixel at a detection rate faster than a full search technique in view of the detection rate. As a method for detecting optical flow, the present invention adopts the optical flow detection process proposed by Horn and Schunck. This process assumes that optical flow is constant in a predetermined area, and unites optical flow constraint equations of individual pixels in eight adjacent directions to calculate a minimum value satisfying constraint conditions based upon a least square method so as to produce optical flow.

When optical flow for the previous and present frame images is detected, an angle histogram is generated with respect to vector values of detected optical flow in S107. The process for generating an angle histogram will not be described further since it was described previously in detail.

When the angle histogram is generated, object movement and camera movement are distinguished from each other in S108 based upon Equation 3 of Regulation 1 discussed above.

That is, $\theta$ of Equation 3 is compared to a critical value in S109. If $\theta$ is smaller than the preset critical value, that is, the amount of actual optical flow creation is under 30% of the total pixels, it is determined that only object movement has taken place, and the optical flow area between the previous and present frames is projected in X-Y axes in S115. Then, vertical and horizontal coordinate values of an object are produced based upon projected histogram values so as to extract an object area in S116. Such a process for extracting an object is illustrated in FIGS. 6A to 6D.

Summarizing the object extracting process, as shown in FIG. 6A, optical flow is detected for input images (i.e., previous and present frames), X-Y axis projection is performed with respect to a detected optical flow area, and vertical and horizontal coordinate values of an object are produced based upon projected histogram values so as to extract the area of the object.

If $\theta$ is equal to the preset critical value or more according to Equation 3 of Regulation 1 above in S109, it is determined that only camera movement has taken place without any object movement.

However, such camera movement also has to be classified into panning, tilting, shaking and the like.

Therefore, Equation 4 of Regulation 2 above is applied in S110 and S111 in order to distinguish among camera movement types.

That is, camera shaking creates generally uniform histogram values according to angles as shown in FIG. 5D, whereas camera panning and tilting causes the camera to move in one vertical or horizontal direction, thereby creating a histogram profile prominent at one angle as shown in FIG. 4D.

Therefore, Equation 4 is applied to distinguish among shaking, panning and tilting of a camera.

Equation 4 above is produced based upon such considerations as the fact that camera panning or tilting causes a camera to move in one direction, thereby creating a histogram profile prominent at one angle with a small value of standard deviation, whereas camera shaking causes a camera to move in several directions simultaneously rather than in one direction, thereby having a relatively large value of standard deviation. Generally, according to Equation 4, b existing in the range of 0 to 1 and 34 to 35 indicates camera panning and b existing in the range of 17 to 19 and 26 to 27 indicates camera tilting.

Furthermore, object movement may take place simultaneously with camera shaking, panning or tilting.

In this case, Regulation 3 above may be applied in S112 to detect any object movement taking place at the same time with camera shaking, panning or tilting.

That is, if object movement takes place in the interim of camera panning or tilting, it is necessary to distinguish this from other factors. For this purpose, the controller 140 shown in FIG. 1 applies Equation 3 of Regulation 1 discussed above to histogram values except for the angle b of maximum cumulative number in the angle histogram (H) when camera panning or tilting has taken place according to Equation 3 in Regulation 1 above and Equation 4 in Regulation 2 above. In this way, if the result of Equation 3 of Regulation 1 exceeds a critical value, it is determined that object movement has taken place simultaneously with camera panning or tilting.

After both of object movement and camera movement are detected, a process of extracting only an object based upon object movement is needed.

In order to extract an object from a background, an optical flow area detected by the optical flow detector 120 is first projected in X-Y axes, and vertical and horizontal coordinate values of an object are produced based upon projected histogram values, thereby extracting an object area. This process is illustrated in FIG. 6A to 6D.

Then, if object movement has taken place simultaneously with camera panning or tilting, the object area is extracted through X-Y axis projection by subtracting optical flow corresponding to the angle b of maximum movement from total optical flow, and using the remaining optical flow, in S113, S114, S115 and S116.

As described above, the apparatus and the method for distinguishing between camera movement and object movement, and extracting an object in a video surveillance system for detecting an invader based upon object movement according to the present invention, are adapted, to distinguish actual invader detection owing to object movement from erroneous invader detection owing to camera's movement or shaking, and in the case of actual invader detection owing to object movement, to extract a corresponding object. In this way, optical flow is obtained from an input dynamic image and converted into angle values, and classified. If an angle value exceeds a predetermined critical value, it is determined that object movement is detected. If the angle value does not exceed the predetermined critical value, it is determined that camera movement or shaking is detected. In the case of object movement, only an area of movement is extracted from an object via X-Y projection with respect to optical flow of an object, and then the object is divided. This is carried out in consecutive frames to track passage of the moving object.

In addition, the invention can be applied to an unmanned robotic monitoring camera in a Ubiquitous Robot Companion (URC) system in order to detect an invader. Conventional movement detection methods utilize merely differential images under conditions that a camera is fixed. However, since a monitoring robot should continuously move and roam about monitoring sites, it is required to be able to distinguish the pixel value variation of a camera according to the movement of the robot from that according to object movement. Accordingly, the present invention can distinguish actual object movement from others, and thus detect and tract a corresponding object when applied to the URC monitoring system.

While the present invention has been shown and described in connection with the preferred embodiments, it will be apparent to those skilled in the art that modifications and variations can be made without departing from the spirit and scope of the invention as defined by the appended claims.

## Claims

1. An apparatus for distinguishing between camera movement and object movement and, for extracting an object in a video surveillance system, comprising:

   an optical flow extractor for extracting a motion vector for optical flow between a present input image frame and a previous image frame;
   an angle histogram generator for generating an angle histogram of the motion vector for optical flow extracted by the optical flow extractor; and
   a controller for distinguishing between object movement and camera movement based upon the angle histogram generated by the angle histogram generator, and in a case of object movement, for extracting a moving object.

2. The apparatus according to claim 1, further comprising means for filtering noise from the present and previous image frames, and for providing the present and previous frames cleared of noise to the optical flow extractor.

3. The apparatus according to claim 2, wherein the noise filtering means include a Gaussian filter for clearing Gaussian noise.

4. The apparatus according to claim 1, wherein the angle histogram generator converts the motion vector for optical flow extracted by the optical flow extractor into an angle so as to generate the angle histogram for the optical flow motion vector.

5. The apparatus according to claim 4, wherein the angle histogram is generated after radian values of $-\pi$ to $+\pi$ are converted into angle values of 0 to 360 degrees, and then the angle values are normalized to 0 to 35.

6. The apparatus according to claim 1, wherein the controller determines object movement when a result of Equation 1 is smaller than a predetermined critical value, and determines camera movement without object movement when the result of Equation 1 is at least the predetermined critical value, wherein Equation 1 is:

$$\theta = \frac{Mv}{TMv}$$

   if $\theta <$ critical value, object movement, and
   if $\theta \ \exists$ critical value, camera movement; and
   wherein Mv indicates a number of optical flow that is actually created, and TMv indicates a number of whole pixels where optical flow can take place.

7. The apparatus according to claim 6, wherein the predetermined critical value is a number of actual optical flow creations that is 30% (0.3) of total pixels.

8. The apparatus according to claim 6, wherein the controller includes an object extractor which extracts the moving object via X-Y projection with respect to optical flow detected by the optical flow detector when object movement has taken place without camera movement.

9. The apparatus according to claim 1, wherein the controller distinguishes among camera movement types including shaking, panning and tilting according to Equation 2 as follows:

$$\mathrm{b} = \max(\mathrm{H}),\ \theta_\sigma = \frac{\sqrt{\sum_{v=0}^{35}(\theta_b - \theta_v)^2}}{N},$$

if $\theta_\sigma < T$, pan tilt, and

if $\theta_\sigma \ni T$, camera shaking;

wherein b indicates an angle having a maximum cumulative number in an angle histogram (H), $\theta b$ indicates a maximum cumulative number at b and indicates a histogram cumulative number at an angle v, and T indicates a critical value for distinguishing camera movement from other factors.

10. The apparatus according to claim 9, wherein the controller determines camera panning when b exists in a range of 0 to 1 and 34 to 35, and determines camera tilting when b exists in a range of 17 to 19 and 26 to 27.

11. The apparatus according to claim 9, wherein the controller, after determining the camera movement types according to Equation 2, determines that object movement has taken place simultaneously with camera movement when remaining angle ($\theta$) histogram values of the angle histogram (H), except for the angle b of maximum cumulative number, are at least a critical value 0.3 of Equation 1.

12. The apparatus according to claim 11, wherein, when camera movement and object movement take place simultaneously, the controller removes optical flow corresponding to an angle of maximum movement from entire optical flow between the previous and present frames, and applies X-Y projection to optical flow corresponding to remaining angles so as to extract the moving object.

13. A method for distinguishing between camera movement and object movement, and for extracting an object in a video surveillance system, the method comprising the steps of:

    (a) extracting a motion vector for optical flow between a present input image frame and a previous image frame;
    (b) generating an angle histogram of the motion vector for optical flow extracted by step (a); and
    (c) distinguishing between object movement and camera movement based upon the angle histogram generated in step (b) and, in a case of object movement, extracting a moving object.

14. The method according to claim 13, wherein step (a) comprises filtering noise from the present and previous image frames, and then extracting optical flow between the present and previous image frames cleared of noise.

15. The method according to claim 14, wherein noise is filtered with a Gaussian filter.

16. The method according to claim 13, wherein step (b) comprises converting the extracted motion vector for optical flow into an angle, and then generating the angle histogram for the optical flow motion vector.

17. The method according to claim 16, wherein the angle histogram is generated after radian values of $-\pi$ to $+\pi$ are converted into angle values of 0 to 360 degrees, and then the angle values are normalized to 0 to 35.

18. The method according to claim 13, wherein step (c) comprises determining object movement when a result of Equation 1 is smaller than a predetermined critical value, and determining camera movement without object movement when the result of Equation 1 is at least the predetermined critical value, wherein Equation 1 is as follows:

$$\theta = \frac{Mv}{TMv},$$

if θ < critical value, object movement, and
if θ ∃ critical value, camera movement; and
wherein Mv indicates a number of optical flow that is actually created and TMv indicates a number of whole pixels where optical flow can take place.

19. The method according to claim 18, wherein the predetermined critical value is a number of actual optical flow creations that is 30% (0.3) of total pixels.

20. The method according to claim 13, wherein step (c) comprises, when it is determined that object movement has taken place without camera movement, extracting the moving object via X-Y projection with respect to detected optical flow.

21. The method according to claim 13, wherein step (c) comprises distinguishing among camera movement types including shaking, panning and tilting according to Equation 2, as follows:

$$b = \max(H), \ \theta_\sigma = \frac{\sqrt{\sum_{v=0}^{35}(\theta_b - \theta_v)^2}}{N},$$

if $\theta_\sigma$ < T, pan tilt, and
if $\theta_\sigma$ ∃ T, camera shaking; and
wherein b indicates an angle having maximum cumulative number in an angle histogram (H), θb indicates a maximum cumulative number at b and indicates a histogram cumulative number at an angle v, and T indicates a critical value for distinguishing camera movement from other factors.

22. The method according to claim 21, wherein step (c) comprises determining camera panning when b exists in a range of 0 to 1 and 34 to 35, and determining camera tilting when b exists in a range of 17 to 19 and 26 to 27.

23. The method according to claim 21, wherein step (c) comprises, after determining the camera movement types according to Equation 2, determining that object movement has taken place simultaneously with camera movement when remaining angle (θ) histogram values of the angle histogram (H), except for an angle b of maximum cumulative number, are at least a critical value 0.3 of Equation 1.

24. The method according to claim 23, wherein step (c) comprises, when camera movement and object movement have taken place simultaneously, removing optical flow corresponding to an angle of maximum movement from entire optical flow between the previous and present frames, and applying X-Y projection to optical flow corresponding to remaining angles so as to extract the moving object.

# FIG. 1

FIG. 2A

FIG. 2B

FIG. 2C

## FIG. 3A

## FIG. 3B

## FIG. 3C

# FIG. 3D

## FIG. 4A

## FIG. 4B

## FIG. 4C

# FIG. 4D

## FIG. 5A

## FIG. 5B

## FIG. 5C

FIG. 5D

## FIG. 6A

## FIG. 6B

## FIG. 6C

X-AXIS PROJECTION

## FIG. 6D

# FIG. 7

CAMERA INPUT — S101

PRESENT FRAME — S104

PRESENT FRAME — S102

EXTRACT OPTICAL FLOW — S105

GAUSSIAN FILTER — S103

EXTRACT OPTICAL FLOW — S106

GENERATE ANGLE HISTOGRAM — S107

REGULATION 1 — S108

CRITICAL VALUE OR MORE? — S109

NO

YES

REGULATION 2 — S110

DISTINGUISH AMONG CAMERA SHAKING, PANNING AND TILTING — S111

REGULATION 3 — S112

S115    S114

X-Y PROJECTION    REMOVE MAXIMUM OPTICAL FLOW    YES    OBJECT MOVEMENT? — S113

NO

EXTRACT OBJECT — S116